# EUROPÄISCHE PATENTSCHRIFT

(11) **EP 1 803 947 B1**
(45) Veröffentlichungstag und Bekanntmachung des Hinweises auf die Patenterteilung: **05.03.2014**
(21) Anmeldenummer: 06025789.6
(22) Anmeldetag: 13.12.2006
(51) Int. Cl.: F16C 19/18, F16C 25/08, F16C 33/58

(54) **Spielfreies Wälzlager**
Rolling element bearing free of play
Palier à roulement sans jeu

(30) Priorität: 15.12.2005 DE 102005060499
(43) Veröffentlichungstag der Anmeldung: 04.07.2007
(73) Patentinhaber: IMO Holding GmbH, 91350 Gremsdorf (DE)
(72) Erfinder: Hofmann, Georg, 95490 Mistelgau (DE)
(74) Vertreter: Küchler, Stefan

(56) Entgegenhaltungen:
- WO-A-98/34037
- DE-A1- 3 906 773
- DE-C- 952 045
- DE-U- 1 929 815
- FR-E- 11 708
- JP-A- 9 280 256
- US-A- 3 640 591
- US-A- 3 801 171
- US-A- 3 913 993

## Beschreibung

Die Erfindung richtet sich auf eine Wälzlageranordnung in Form eines Doppelschrägkugellagers, insbesondere für eine Drehverbindung, mit zwei konzentrisch zueinander sowie zumindest bereichsweise ineinander angeordneten Ringen, sowie mit einem Spalt zwischen diesen Ringen, so dass sie um eine gedachte, zur Ringebene etwa lotrechte Achse im Zentrum der Ringe gegeneinander verdrehbar sind, wobei im Bereich eines die Drehachse mit etwa konstantem Radius umgebenden Spaltabschnittes zwischen den Ringen zwei Laufbahnen angeordnet sind für zwei Reihen von zwischen den Ringen abrollenden Kugeln, von denen jede Kugel bei gleicher Temperatur der Ringe und der Kugeln wenigstens je einen Berührungspunkt oder -bereich mit Laufbahnabschnitten an jedem der beiden Ringe aufweist, so dass das radiale und/oder axiale Spiel zwischen den beiden Ringen gleich null oder zumindest vernachlässigbar gering ist, mit einer Einrichtung zum Ausgleich von temperaturbedingten, radialen Änderungen des Querschnittes der Laufbahn für die Kugelreihen, so dass die auf den Kugeln lastende Druckspannung und/oder das Spiel zwischen den Ringen etwa konstant bleibt, selbst im Fall einer Temperaturdifferenz zwischen den Ringen und/oder zwischen diesen und den Kugeln.

Bei Wälzlagern sind die beiden Ringe mit unterschiedlichen Anlagenteilen verbunden, die oftmals keine sonstige Verbindung aufweisen. Da andererseits der Kontakt der Wälzkörper mit den beiden Ringen nur auf jeweils äußerst kleine Berührungsflächen beschränkt ist, sind die Ringe thermisch weitgehend voneinander entkoppelt. Je nach Belastungsfall kann daher einer der beiden Ringe eine deutlich andere Temperatur aufweisen als der andere. Damit verbunden ist eine unterschiedliche Wärmedehnung und letzten Endes eine Veränderung des Laufbahnquerschnittes für die Wälzkörper. Dehnt sich der äußere Ring - infolge einer höheren Temperatur - stärker als der innere, so ergibt sich ein Spiel zwischen den Ringen, welches in manchen Anwendungsfällen unzulässig ist, bspw. bei Drehlagern oder -verbindungen in der Medizintechnik, insbesondere bei bildgebenden Scannern für die Medizintechnik. Dehnt sich dagegen der innere Ring - wiederum infolge einer höheren Temperatur - stärker als der äußere, so steigt die auf den Wälzkörpern lastende Druckkraft mit der Folge eines gesteigerten Verschleißes. Beides sollte bei hochwertigen Geräten vermieden werden.

Das deutsche Patent DE 952 045 C offenbart ein gattungsgemäßes Doppelschrägkugellager mit einem als Nasenring ausgebildeten Innenring und einem in Ober- und Unterring geteilten Außenring, dessen Ober- und Unterring in axialer Richtung mittels federnder Elemente vorgespannt sind, indem auf den Verbindungsschrauben zwischen Ober- und Unterring Tellerfedern angeordnet sind; andere elastische Bereiche gibt es nicht.

Ferner ist aus der DE 39 06 773 A1 eine Rundstrickmaschine bekannt, mit einem Nadelzylinder, der an einer zylindrischen Tragscheibe festgelegt ist; diese Tragscheibe ihrerseits wird von einem Lagerkörper umschlossen und ist an diesem gelagert. An die Tragscheibe sind elastische Tragflansche ausgebildet, zwischen denen und dem Lagerkörper sich ein Vierpunktkugellager mit vier Drahtringen abstützt.

Auch die JP 09 280 256 A betrifft ein einreihiges Vierpunktkugellager.

Daraus resultiert das die Erfindung initiierende Problem, bei einem gattungsgemäßen Doppelschrägkugellager, insbesondere für eine Drehverbindung, Sorge dafür zu tragen, dass die auf den Wälzkörpern lastende Druckkraft stets möglichst konstant ist, sich also zeitlich nicht ändert.

Die Lösung dieses Problems gelingt bei einem gattungsgemäßen Doppelschrägkugellager dadurch, dass
a) je ein Bereich zweier Laufbahnabschnitte am freien Ende jeweils einer von zwei Federn angeordnet ist, deren Fußbereiche mit einem gemeinsamen Ring verbunden sind, wobei
b) beide Flanken der je einen Laufbahnabschnitt tragenden Federn durch je einen schlitzförmigen Einschnitt gebildet sind, und wobei
c) sich auf Höhe der Kugelmittelpunkte je ein Schlitz befindet.

Die Erfindung geht dabei aus von der Erkenntnis, dass es praktisch unmöglich ist, die für die auf den Wälzkörpern lastende Druckkraft maßgebenden Störgrößen, insbesondere Temperaturunterschiede zwischen den Ringen und/oder den Ringen und den Wälzkörpern zu kontrollieren. Sie akzeptiert dagegen derartige Störgrößen und minimiert statt dessen deren Auswirkungen auf den Querschnitt der Laufbahn für die Wälzkörper, mit der Wirkung, dass dieselben trotz störender Umgebungseinflüsse stets nahezu unveränderte Betriebsparameter erfahren. Die erfindungsgemäße Federung ermöglicht eine - gegensinnige - Veränderung des Laufbahnquerschnittes bei veränderten Umgebungseinflüssen, mithin eine Kompensation derselben. Zwar ist der Begriff "federnd" relativ, insofern als bei hinreichend großen Kräften fast jede Struktur eine gewisse elastische Verformung zeigt, bevor dann die plastische Verformung einsetzt. Gemeint ist dabei aber nicht der Bereich der elastischen Verformbarkeit des Wälzlagers selbst, sondern eine besondere Elastizität einer einen Laufbahnabschnitt aufweisenden Struktur, insbesondere relativ zu dem Körper des betreffenden Ringes, und unterhalb des Kraftbereichs der federnden Verformbarkeit desselben. Die federnde Eigenschaft wird erfindungsgemäß durch eine besondere Geometrie einer Teilstruktur des betreffenden Rings erzeugt. Dabei ist ein Bereich wenigstens eines Laufbahnabschnittes an einer Feder eines Ringes angeordnet. Mit "Feder" soll in diesem Zusammenhang das Pendant zu einer Nut gemeint sein, also eine langgestreckte, flache Struktur. Solche exponierte Strukturen zeigen dank ihrer Geometrie eine erhöhte Elastizität, insbesondere im Bereich ihrer freien Kante bzw. Stirnseite. Bei der erfindungsgemäßen Anordnung ist der Laufbahnabschnitt an dem freien Ende der Feder ausgebildet, während der diesem Ende gegenüberliegende Fuß mit dem betreffenden Ring verbunden ist; so dass die Elastizität des den Laufbahnabschnitt tragenden Bereichs maximal ist. Indem beide Flanken der einen Laufbahnabschnitt tragenden Feder durch einen schlitzförmigen Einschnitt gebildet sind, kann ein üblicherweise geschützt im Inneren eines Wälzlagers liegender Laufbahnbereich federnd ausgebildet sein. Um zu vermeiden, dass dabei in dem Bereich des Schlitzgrundes Kerbwirkungen auftreten, werden zwei Laufbahnen verwendet für je eine Reihe von Wälzkörpern; so dass jeder Wälzkörper mit jedem Ring nur einen Berührungspunkt braucht, der gegenüber dem Wälzkörpermittelpunkt in axialer Richtung der Drehachse des Wälzlagers verschoben sein kann. Ferner sind die beiden Laufbahnen in axialer Richtung der Drehachse des Wälzlagers gegeneinander versetzt. Ein solcher Versatz erhöht die Stabilität des Lagers gegenüber Kippmomenten. Indem je ein federnder Abschnitt beider Laufbahnen an einem gemeinsamen Ring angeordnet ist, kann bspw. der Ring mit den nicht abgefederten Laufbahnabschnitten evtl. mit einem geringeren Querschnitt ausgeführt sein, um den Platzbedarf des erfindungsgemäßen Lagers so klein wie möglich zu halten. Auch wird dadurch vermieden, dass sich bei einer Auslenkung einer oder beider Federn die beiden Ringe axial gegeneinander bewegen.

Es hat sich als günstig erwiesen, dass ein Wälzkörper einen federnden Laufbahnabschnitt etwa im Bereich der Mittellinie durch dessen dem Wälzkörper zugewandten Querschnitt berührt. Um eine erhöhte Reibung zu vermeiden, ist der Krümmungsradius der Laufbahn üblicherweise minimal größer als der Krümmungsradius eines darauf abrollenden Wälzkörpers (solange nicht zylindrische Wälzkörper verwendet werden). In diesem Fall ist der eigentliche Berührungsbereich (nahezu) punktförmig. Mit der Geometrie des Laufbahnquerschnittes kann die Lage dieses etwa punktförmigen Berührungsbereichs bestimmt werden. U.a. aus Gründen der Stabilität bzw. Funktionssicherheit sollte dieser Berührungsbereich etwa mittig auf dem federnden Laufbahnbereich angeordnet sein.

Eine andere, vorteilhafte Konstruktionsvorschrift besagt, dass der Strahl von dem Mittelpunkt eines Wälzkörpers zu dessen Berührungspunkt mit dem federnden Laufbahnabschnitt zusammen mit der Linie kürzesten Abstands des betreffenden Wälzkörpers von der Drehachse der Wälzlageranordnung einen Winkel einschließt, der größer ist als 20°, vorzugsweise größer als 30°, insbesondere größer als 40°. Durch diese Maßnahme kann die Richtung des zurückweichenden Laufbahnbereichs weitgehend beliebig gewählt werden. Der Berührungspunkt wandert bei zurückweichendem Laufbahnbereich entlang der Laufbahnoberfläche aus. Da er bei verschwindender Temperaturdifferenz zwischen Innen- und Außenring etwa mittig auf dem federnden Laufbahnbereich liegt, kann er - je nach der Richtung der Temperaturdifferenz - in beide Richtungen ausweichen, also sowohl eine durch Störeinflüsse verursachte Verengung als auch Erweiterung des Abstands zwischen den Laufbahnabschnitten der beiden Ringe ausgleichen.

Entsprechend ihrer Aufgabe, einen Abschnitt der endlosen Laufbahn für die Wälzkörper zu tragen, sollte die Feder endlos ausgebildet sein und den betreffenden Ring umlaufen, so dass die Abroll- oder Berührungspunkte der Wälzkörper sich stets entlang des gefederten Laufbahnbereichs bewegen. Aufgrund gleichbleibender Laufbahneigenschaften wird eine übermäßige Geräuschentwicklung vermieden.

Die Mittellinie bzw. Längsachse des Federquerschnitts von dem Fuß bis zum freien Ende der Feder sollte die Mittelsenkrechte an den Querschnitt durch den daran ausgebildeten Laufbahnabschnitt, insbesondere deren Symmetrielinie, unter einem Winkel schneiden, der ungleich null ist. Dies bedeutet, dass das den Laufbahnabschnitt tragende Federende asymmetrisch bezüglich der Federlängsachse ausgebildet ist. Dies wiederum hat zur Folge, dass sich bei einer seitlichen Bewegung der Feder der Wälzkörper relativ zu dem Laufbahnabschnitt bewegen kann ähnlich wie eine Kugel, die sich längs einer - insofern ebenfalls asymmetrischen - schiefen Ebene bewegen kann. So wird eine seitliche Federbewegung parallel zur Drehachse der Wälzlageranordnung transformiert in eine radial bezüglich dieser Drehachse gerichtete Ausweichbewegung des Wälzkörper-Rollpunktes.

Wenn der Winkel zwischen den sich schneidenden Mittellinien größer ist als 20°, vorzugsweise größer als 30°, insbesondere größer als 40°, so ergibt sich ein relativ großes Transformationsverhältnis von der (axialen) Federbewegung in die (radiale) Rollpunkt-Verlagerung, d.h., bereits bei einer kleinen Federbewegung eine relativ große radiale Versetzung des Wälzkörper-Rollpunktes.

Andererseits sollte der Winkel zwischen den sich schneidenden Mittellinien nicht größer sein als 70°, vorzugsweise kleiner als 60°, insbesondere kleiner als 50°, denn solchenfalls könnten sich - bspw. bei Vibrationen der erfindungsgemäßen Wälzlageranordnung - leicht instabile Verhältnisse ergeben.

Weitere Vorteile ergeben sich daraus, dass die Längsachse durch einen eine Feder begrenzenden Schlitz etwa lotrecht zu der Drehachse der Wälzkörperanordnung verläuft, insbesondere auf Höhe der Laufbahnmitte, also in derjenigen Ebene, in der sich die Mittelpunkte der Wälzkörper bewegen. In diesem Fall liegt die angrenzende Feder nicht auf dieser Mittelpunktsebene der Wälzkörper, sondern seitlich daneben, woraus die erwünschte Asymmetrie des gefederten Laufbahnabschnittes resultiert.

Darüber hinaus ist ein symmetrisch zu der Mittelpunktsebene der Wälzkörper liegender Schlitz besonders dazu geeignet, einen Distanzring für die Wälzkörper aufzunehmen. Durch einen solchen Käfig werden einerseits die Wälzkörper auf äquidistanten Abständen gehalten; außerdem wird der Zusammenbau des Lagers vereinfacht, weil selbst eine große Anzahl von Wälzkörpern durch einen Distanzring vereinigt und zusammengehalten werden und demnach in einem einzigen Arbeitsgang in das Lager eingesetzt werden können.

Außerdem lassen sich die beiden, axial gegeneinander versetzten Laufbahnen für je eine Wälzkörperreihe symmetrisch zu der gemeinsamen Mittelebene anordnen. Daraus resultiert eine gleichmäßige Aufteilung der Kräfte und Belastungen auf beide Wälzkörperreihen, was sich wiederum förderlich auf die erreichbare Betriebsdauer auswirkt.

Wenn die federnden Abschnitte beider Laufbahnen einander benachbart sind, so sind sie bestrebt, die beiden Wälzkörperreihen in axialer Richtung der Drehachse der Wälzlageranordnung auseinander zu drücken. Umgekehrt werden sie durch die Wälzkörper in axialer Richtung aufeinander zu bewegt; es ergibt sich demnach zwischen den beiden federnden Abschnitten keine Kerbwirkung.

Um eine Relativbewegung zwischen den beiden benachbarten, aber entgegengesetzt federnden Laufbahnabschnitten zu ermöglichen, können dieselben durch einen Schlitz voneinander getrennt sein.

Da somit die Berührungspunkte oder -bereiche der Wälzkörper beider Reihen mit den gefederten Laufbahnabschnitten eines Ringes einander zugewandt sind, folgt, dass die Berührungspunkte oder -bereiche der Wälzkörper beider Reihen mit den betreffenden Laufbahnen des nicht federnden Rings einander abgewandt sind. Die Wälzkörper unterschiedlicher Reihen werden von diesen einander abgewandten Berührungspunkten in axialer Richtung aufeinander zu bzw. gegen die nebeneinander liegenden, gefederten Laufbahnabschnitte gedrückt.

So lange die Wälzkörper auf Spannung belastet sind, werden sie sich gegenüber den Ringen so ausrichten, dass ihre Berührungspunkte oder -bereiche mit den Laufbahnabschnitten an beiden Ringen einander bezüglich des Mittelpunktes des betreffenden Wälzkörpers etwa diametral gegenüberliegen. Dadurch werden Kräfte über die Wälzkörper von einem Ring zum anderen nur durch Formschluß, also lotrecht zur Wälzkörperoberfläche übertragen, nicht dagegen mittels Reibung tangential zur Wälzkörperoberfläche.

Die Erfindung läßt sich dahingehend weiterbilden, dass ein Ring mit einer umlaufenden Verzahnung versehen ist. Dadurch ist die Möglichkeit eröffnet, einen Ring relativ zu dem anderen anzutreiben und definiert zu verdrehen.

Vorzugsweise ist die Verzahnung der/den Laufbahn(en) des betreffenden Rings etwa gegenüberliegend angeordnet, also an dem der Wälzlageranordnung abgewandten Oberflächenbereich eines Rings.

Zur Übertragung von Lasten können ohne weiteres auch elastisch gestaltete Laufbahnabschnitte verwendet werden oder beitragen, da ihre Tragfähigkeit durch die relativ hohe Federsteifigkeit kaum geschmälert wird. Andererseits können auch in dem Ring ohne federnde Laufbahnabschnitte pro Wälzkörperreihe zwei Laufbahnflanken vorgesehen sein, zwecks zusätzlicher axialer Führung der Wälzkörper.

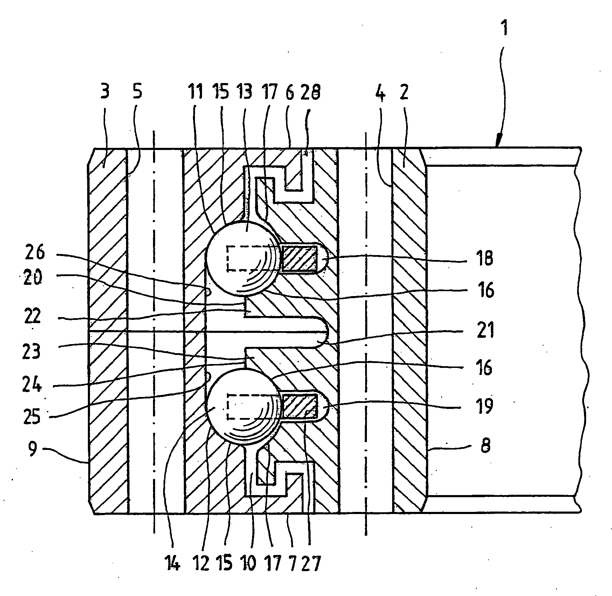

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Diese zeigt einen Querschnitt durch die Ringe einer erfindungsgemäßen Wälzlageranordnung entlang einer radial bezüglich der Drehachse verlaufenden Ebene.

Die Zeichnung zeigt einen Schnitt durch die Ringe eines sog. Doppelschrägkugellagers 1 in X-Anordnung. Dieses Kugellager 1 umfaßt einen Innenring 2 und einen Außenring 3. Beide Ringe 2, 3 sind symmetrisch zu und gegeneinander verdrehbar um eine Drehachse, die aufgrund der Größe des dargestellten Lagers weit außerhalb des rechten Blattrandes liegt. Zum Anschluß an Maschinen- oder Anlagenteile, und/oder an ein Chassis oder Fundament sind beide Ringe 2, 3 von einer Mehrzahl kranzförmig angeordneter, zu der Drehachse paralleler Bohrungen 4, 5 zum Hindurchstecken von Befestigungsschrauben durchsetzt.

Der Gesamtquerschnitt durch beide Ringe 2, 3 ist im dargestellten Beispiel etwa rechteckig, nahezu quadratisch, mit angefasten Kanten zwischen je einer Stirnseite 6, 7 und der inneren Mantelfläche 8 einerseits bzw. der äußeren Mantelfläche 9 andererseits. Der Außenring 3 ist zur Vereinfachung der Montage etwa entlang seiner Mittelebene geteilt.

Beide Ringe 2, 3 sind durch einen Spalt 10 voneinander getrennt. Im Bereich dieses Spaltes befinden sich zwei in axialer Richtung gegeneinander versetzte Laufbahnen 11, 12 für je eine Reihe von kugelförmigen Wälzkörpern 13, 14. Jede Laufbahn 11, 12 umfaßt mindestens je einen Laufbahnabschnitt 15, 16, 17 an jedem Ring 2, 3. Ein Querschnitt durch den/die Laufbahnabschnitt (-e) 15, 16, 17 eines Ringes 2, 3 folgen jeweils etwa einem Kreissegment von weniger als einem Halbkreissegment.

Der Krümmungsradius eines Querschnitts durch einen Laufbahnabschnitt 15, 16, 17 ist minimal größer als der Radius einer Kugel 13, 14, so dass sich jeweils nur höchstens ein etwa punktförmiger Berührungsbereich zwischen einer Kugel 13, 14 und einem Ring 2, 3 bzw. Laufbahnabschnitt 15, 16, 17 ergibt, wodurch die Reibung minimiert wird.

Bei gleicher Temperatur aller Teile 2, 3, 13, 14 des Kugellagers 1 ist der Durchmesser einer Kugel 13, 14 andererseits minimal größer als der lichte Durchmesser einer Laufbahn 11, 12 zwischen den beiden Ringen 3, 4, so dass alle Kugeln 13, 14 geringfügig mit Druckspannung beaufschlagt sind.

Nimmt nun - aus welchen Gründen auch immer - der innere Ring 2 eine höhere Temperatur an als der Außenring 3, so dehnt sich der Innenring 2 stärker aus als der Außenring 3 - der Spalt 10 wird dadurch enger. Bei einem herkömmlichen Kugellager würde dadurch die auf den Kugeln lastende Druckkraft größer, diese wären einem erhöhten Verschleiß ausgesetzt und das Kugellager würde vorzeitig kaputtgehen.

Bei dem erfindungsgemäßen Kugellager 1 ist jedoch eine Vorkehrung getroffen, um negative Auswirkungen einer solchen Temperaturdifferenz zu vermeiden. Diese Einrichtung besteht u.a. darin, dass die Laufbahnabschnitte 16, 17 eines Ringes, im dargestellten Beispiel des Innenringes 2, mit je einem Schlitz 18, 19 versehen sind. Diese Schlitze 18, 19 liegen jeweils auf der Höhe der Mittelpunkte der Kugeln 13, 14 einer Reihe.

Außerdem weist die dem Spalt 10 zugewandte Mantelfläche 20 in dem Bereich zwischen den beiden Laufbahnen 11 einen weiteren, rundumlaufenden Schlitz 21 auf, der sich entlang der Mittel- oder Symmetrieebene des Kugellagers 1 erstreckt.

Zwischen dem mittleren Schlitz 21 des Kugellagers 1 und je einem Schlitz 18, 19 auf Höhe einer Kugelreihe 13, 14 verbleibt demzufolge je eine Feder 22, 23. Die Schlitze 18, 19, 21 sind vorzugsweise allesamt etwa gleich tief. Sie erstrecken sich von der dem Spalt 10 zugewandten Mantelseite 20 etwa bis zur Hälfte der radialen Erstreckung des Innenrings 2, wie die Zeichnung erkennen läßt. Die radial bezüglich der Lagerdrehachse gemessene Länge der Federquerschnitte 22, 23 ist demnach größer als deren axial zu der Lagerdrehachse gemessene Breite, so dass sich die Federn 22, 23 in begrenztem Umfang seitlich, d.h. in Richtung der Drehachse des Kugellagers 1, bewegen können.

Im Bereich der freien Enden 24 der Federn 22, 23 befindet sich je ein Laufbahnabschnitt 16 für eine Kugelreihe 13, 14. Diese Laufbahnabschnitte 16 liegen jedoch nicht symmetrisch zu der Längsachse bzw. -ebene durch die Federn 22, 23, sondern sind zu den einander abgewandten Kanten der Federenden 24 hin verschoben. An diesen Laufbahnabschnitten 16 liegen die Kugeln 13, 14 an, während die anderen Laufbahnabschnitte 17 am Innenring 2 im Normalfall keinen Berührungspunkt mit den Kugeln 13, 14 haben.

Die Kugeln 13, 14 werden also von den Laufbahnabschnitten 16 in axialer Richtung auseinander gedrückt, gleichzeitig aber auch radial nach außen. Beide Kraftkomponenten werden von dem zugeordneten Laufbahnabschnitt 15 am Außenring 3 durch eine Gegenkraft aufgefangen; der Außenring 3 stützt sich sozusagen über die Kugeln 13, 14 am Innenring 2 ab.

Die Laufbahnabschnitte 15 des Außenrings 3 sind jedoch nicht federnd ausgebildet. Es handelt sich vielmehr um eine muldenförmige, rundumlaufende Ausnehmung 25 in der dem Spalt 10 zugewandten, radial innen liegenden Mantelseite 26. Die Flanken dieser Mulde 25 bilden die beiden Laufbahnabschnitte 15 des Außenrings 3. Ein Querschnitt durch dies Flanken bzw. Laufbahnabschnitte 15 folgt etwa einem Viertelkreis. Der Boden der Mulde 25 hat einen etwa ebenen Querschnitt.

Da der lichte Durchmesser einer Laufbahn 11, 12 im statischen thermischen Gleichgewicht zwischen den Ringen 2, 3 geringfügig kleiner ist als der Durchmesser einer Kugel 13, 14, sind letztere im Normalfall einer Druckspannung ausgesetzt.

Entsteht nun eine Temperaturdifferenz zwischen Innen- und Außenring 2, 3, so verengt oder verbreitert sich der Spalt 10 je nach Richtung der Temperaturdifferenz geringfügig. Da jedoch die Federn 22, 23 in axialer Richtung der Drehachse begrenzt beweglich sind, entspricht der lichte Durchmesser einer Laufbahn 11, 12 unabhängig von der Breite des Spaltes 10 immer etwa dem Durchmesser einer Kugel 13, 14:

Wird der Spalt 10 breiter, bewegen sich die Federn 22, 23 auseinander, die einander zugeordneten Laufbahnen 15, 16 nähern sich wieder einander an. Wird der Spalt 10 dagegen enger, so werden die beiden Federn 22, 23 von den Kugeln 13, 14 aufeinander zu bzw. zusammen gedrückt, wodurch sich die Kugeln 13, 14 den erforderlichen Platz schaffen.

Innerhalb der Schlitze 18, 19 verbleibt genügend Platz zur Aufnahme je eines Kugelkäfigs 27, der die einzelnen Kugeln 13, 14 einer Reihe auf konstanten Abständen hält.

Der Spalt 10 verläuft jenseits der beiden Kugelreihen 13, 14 mäanderförmig bis zu je einer Stirnseite 6, 7 des Kugellagers 1, nach Art einer Labyrinthdichtung 28. Alternativ oder kumulativ dazu können auch Dichtungsringe, insbesondere Gummidichtungen, vorgesehen sein. Der Hohlraum des Spaltes 10 zwischen solchen Dichtungsringen kann mit einem Schmiermittel, bspw. Schmierfett, gefüllt sein.

An einer Mantelfläche des Kugellagers 1, insbesondere an der inneren Mantelfläche 8 oder an der äußeren Mantelfläche 9, kann eine Verzahnung vorgesehen sein, zum kämmenden Eingriff mit einem angetriebenen Ritzel oder einer angetriebenen Schnecke.

Weitere Modifikationen im Rahmen der Erfindung sind möglich; bspw. können die Federn 22, 23 mit den diese begrenzenden Schlitzen 18, 19, 21 an der dem Spalt 10 zugewandten Mantelfläche 26 des Außenrings 3 angeordnet sein, während sodann die Mulde 25 an der Mantelfläche 20 des Innenrings 2 angeordnet wäre. Es könnte sogar eine Feder 22 am Innenring 2 und eine Feder 23 am Außenring 3 angeordnet sein.

## Patentansprüche

1. Wälzlageranordnung (1) in Form eines Doppelschrägkugellagers, insbesondere für eine Drehverbindung, mit zwei konzentrisch zueinander sowie zumindest bereichsweise ineinander angeordneten Ringen (2,3), sowie mit einem Spalt (10) zwischen diesen Ringen (2,3), so dass sie um eine gedachte, zur Ringebene etwa lotrechte Achse im Zentrum der Ringe (2,3) gegeneinander verdrehbar sind, wobei im Bereich eines die Drehachse mit etwa konstantem Radius umgebenden Spaltabschnittes zwischen den Ringen (2,3) zwei Laufbahnen (11,12) angeordnet sind für zwei Reihen von zwischen den Ringen abrollenden Kugeln (13,14), von denen jede Kugel (13,14) bei gleicher Temperatur der Ringe (2,3) und der Kugeln (13,14) wenigstens je einen Berührungspunkt oder -bereich mit Laufbahnabschnitten (15,16) an jedem der beiden Ringe (2,3) aufweist, so dass das radiale und/oder axiale Spiel zwischen den beiden Ringen (2,3) gleich null oder zumindest vernachlässigbar gering ist, mit einer Einrichtung zum Ausgleich von temperaturbedingten, radialen Änderungen des Querschnittes der Laufbahn (11,12) für die Kugelreihen (13,14), so dass die auf den Kugeln (13,14) lastende Druckspannung und/oder das Spiel zwischen den Ringen (2,3) etwa konstant bleibt, selbst im Fall einer Temperaturdifferenz zwischen den Ringen (2,3) und/oder zwischen diesen und den Kugeln (13,14), **dadurch gekennzeichnet, dass**
a) je ein Bereich zweier Laufbahnabschnitte (16) am freien Ende (20,24) jeweils einer von zwei Federn (22,23) angeordnet ist, deren Fußbereiche mit einem gemeinsamen Ring (2) verbunden sind, wobei
b) beide Flanken der je einen Laufbahnabschnitt (16) tragenden Federn (22,23) durch je einen schlitzförmigen Einschnitt (18,19,21) gebildet sind, und wobei
c) sich auf Höhe der Kugelmittelpunkte je ein Schlitz (18, 19) befindet.

2. Wälzlageranordnung nach Anspruch 1, **dadurch gekennzeichnet, dass** eine Kugel (13,14) einen federnden Laufbahnabschnitt (16) etwa im Bereich der Mittellinie durch dessen Querschnitt berührt.

3. Wälzlageranordnung nach einem der Ansprüche 1 oder 2, **dadurch gekennzeichnet, dass** der Strahl von dem Mittelpunkt einer Kugel (13,14) zu dessen Berührungspunkt mit dem federnden Laufbahnabschnitt (16) mit der Linie kürzesten Abstands der betreffenden Kugel (13,14) von der Drehachse der Wälzlageranordnung (1) einen Winkel einschließt, der größer ist als 20°, vorzugsweise größer als 30°, insbesondere größer als 40°.

4. Wälzlageranordnung nach einem der vorhergehenden Ansprüche, **dadurch gekennzeichnet, dass** die einen Laufbahnabschnitt (16) tragende Feder (22,23) endlos ausgebildet ist und den betreffenden Ring (2,3) umläuft.

5. Wälzlageranordnung nach einem der vorhergehenden Ansprüche, **dadurch gekennzeichnet, dass** die Mittellinie des Federquerschnitts (22,23) die Mittelsenkrechte des Querschnitts durch den daran ausgebildeten Laufbahnabschnitt (16), insbesondere dessen Symmetrielinie, unter einem Winkel schneidet, der ungleich null ist.

6. Wälzlageranordnung nach Anspruch 5, **dadurch gekennzeichnet, dass** der Winkel zwischen den sich schneidenden Mittel- bzw. Symmetrielinien größer ist als 20°, vorzugsweise größer als 30°, insbesondere größer als 40°.

7. Wälzlageranordnung nach einem der Ansprüche 5 oder 6, **dadurch gekennzeichnet, dass** der Winkel zwischen den sich schneidenden Mittel- bzw. Symmetrielinien kleiner ist als 70°, vorzugsweise kleiner als 60°, insbesondere kleiner als 50°.

8. Wälzlageranordnung nach einem der vorhergehenden Ansprüche, **dadurch gekennzeichnet, dass** die Längsachse durch einen eine Feder (22,23) begrenzenden Schlitz (18,19,21) etwa lotrecht zu der Drehachse der Wälzlageranordnung (1) verläuft.

9. Wälzlageranordnung nach Anspruch 8, **dadurch gekennzeichnet, dass** in wenigstens einem eine Feder (22,23) begrenzenden Schlitz (18,19), insbesondere in einem etwa in der Mittelpunktsebene der Kugeln(13,14) einer Reihe verlaufenden Schlitz (18,19), ein Distanzring (27) für die Kugeln (13,14) eingelegt ist.

10. Wälzlageranordnung nach einem der vorhergehenden Ansprüche, **dadurch gekennzeichnet, dass** die beiden Laufbahnen (11,12) symmetrisch zu der dazwischen liegenden, gemeinsamen Mittelebene ausgebildet sind.

11. Wälzlageranordnung nach einem der vorhergehenden Ansprüche, **dadurch gekennzeichnet, dass** die federnden Abschnitte (16) beider Laufbahnen (11,12) einander benachbart sind.

12. Wälzlageranordnung nach Anspruch 11, **dadurch gekennzeichnet, dass** die beiden, einander benachbarten, federnden Laufbahnabschnitte (16) durch einen Schlitz (21) voneinander getrennt sind.

13. Wälzlageranordnung nach einem der vorhergehenden Ansprüche, **dadurch gekennzeichnet, dass** die Berührungspunkte oder -bereiche der Kugeln (13,14) beider Reihen mit den betreffenden Laufbahnabschnitten (15) des nicht federnden Rings (2,3) einander abgewandt sind.

14. Wälzlageranordnung nach einem der vorhergehenden Ansprüche, **dadurch gekennzeichnet, dass** die Berührungspunkte oder -bereiche der Kugeln (13,14) mit den Laufbahnabschnitten (15,16) an beiden Ringen (2,3) einander bezüglich des Mittelpunktes der betreffenden Kugel (13,14) etwa diametral gegenüberliegen.

15. Wälzlageranordnung nach einem der vorhergehenden Ansprüche, **dadurch gekennzeichnet, dass** ein Ring (2,3) mit einer umlaufenden Verzahnung versehen ist.

16. Wälzlageranordnung nach Anspruch 15, **dadurch gekennzeichnet, dass** die Verzahnung der/den Laufbahn(en) (15,16,17) des betreffenden Rings (2,3) etwa gegenüberliegend angeordnet ist.

## Claims

1. Roller bearing assembly in the form of a double-row angular-contact ball bearing, especially for a rotary connection, the ball bearing comprising two rings (2, 3) arranged mutually concentrically and at least regionally inside each other, and comprising a gap (10) between said rings (2, 33), so that they are rotatable relative to one another about an imaginary axis in the center of said rings (2, 3) and approximately perpendicular to the ring plane, wherein disposed in the region of a gap portion situated between said rings (2, 3) and surrounding the axis of rotation at an approximately constant radius are two raceways (11, 12) for two rows of balls (13, 14) each rolling between the rings, each of which said balls (13, 14), when said rings (2, 3) and said balls (13, 14) are at the same temperature, has at least one point or region of contact with said raceway portions (15, 16) on each of said two rings (2, 3), so that the radial and/or axial clearance between said two rings (2, 3) is equal to zero or at least is negligibly small, further comprising a mechanism for compensating for temperature-induced, radial changes in the cross section of said raceway (11, 12) for the rows of balls (13, 14), so that the compressive stress exerted on said balls (13, 14) and/or the clearance between said rings (2, 3) remains approximately constant, even in the case of a temperature difference between said rings (2, 3) and/or between them and said balls (13, 14), **characterized in that**
a) a region of two raceway portions (16) is disposed at a free end (20, 24) of one of two springs (22, 23), the foot sections of said springs (22, 23) being connected to a common ring (2); wherein
b) both flanks of the raceway portions (16) carrying springs (22, 23) are formed by slot-shaped recesses (18, 19, 21); and wherein
c) a slot (18, 19) is aligned with a height of the centers of the ball.

2. Roller bearing assembly according to in claim 1, **characterized in that** a roller (13, 14) contacts a resilient raceway portion (16) approximately in the region of the center line through its cross section.

3. Roller bearing assembly according to one of claims 1 or 2, **characterized in that** the straight line from the center of a said ball (13, 14) to its point of contact with said resilient raceway portion (16) forms an angle with the line of shortest distance between the respective said ball (13, 14) and the axis of rotation of said roller bearing arrangement (1) that is greater than 20°, preferably greater than 30°, particularly greater than 40°.

4. Roller bearing assembly according to one of the preceding claims, **characterized in that** said spring (22, 23) carrying said one raceway portion (16) is configured as endless and passes all the way around the respective said ring (2, 3).

5. Roller bearing assembly according to one of the preceding claims, **characterized in that** the center line of the spring cross section (22, 23) intersects the perpendicular bisector of the cross section through the raceway portion (16) formed thereon, particularly its line of symmetry, at an angle that is not zero.

6. Roller bearing assembly according to claim 5, **characterized in that** the angle between said intersecting center lines or lines of symmetry is greater than 20°, preferably greater than 30°, particularly greater than 40°,

7. Roller bearing assembly according to one of claims 5 or 6, **characterized in that** the angle between said intersecting center lines or lines of symmetry is less than 70°, preferably less than 60°, particularly less than 50°.

8. Roller bearing assembly according to one of the preceding claims, **characterized in that** the longitudinal axis through a slot (18, 19, 21) bounding a spring (22, 23) runs approximately perpendicular to the axis of rotation of said roller bearing arrangement (1).

9. Roller bearing assembly according to claim 8, **characterized in that** a spacer ring (27) for said balls (13, 14) is seated in at least one said slot (18, 19) bounding a said spring (22, 23), particularly in a said slot (18, 19) extending approximately in the center plane of the said ball bearings (13, 14) of a row.

10. Roller bearing assembly according to one of the preceding claims, **characterized in that** said two raceways (11, 12) are configured symmetrically to the common center plane lying therebetween.

11. Roller bearing assembly according to one of the preceding claims, **characterized in that** said resilient portions (16) of said two raceways (11, 12) are adjacent each other.

12. Roller bearing assembly according to claim 11, **characterized in that** said two mutually adjacent, resilient raceway portions (16) are separated from each other by a said slot (21).

13. Roller bearing assembly according to one of the preceding claims, **characterized in that** said points or regions of contact of said balls (13, 14) of both rows with the respective raceway sections (15) of said non-resilient ring (2, 3) face away from each other.

14. Roller bearing assembly according to one of the preceding claims, **characterized in that** said points or regions of contact of said balls (13, 14) with said raceway portions (15, 16) on both of said rings (2, 3) are disposed approximately diametrically opposite each other with respect to the center of the respective said ball (13, 14).

15. Roller bearing assembly according to one of the preceding claims, **characterized in that** one said ring (2, 3) is provided with circumferential teeth.

16. Roller bearing assembly according to claim 15, **characterized in that** said teeth of said raceway(s) (15, 16, 17) are disposed approximately opposite said respective ring (2, 3).

## Revendications

1. Disposition de roulements (1) sous forme d'un roulement à deux rangées de billes à contact oblique, en particulier pour une liaison tournante, avec deux bagues (2, 3) disposées concentriquement l'une par rapport à l'autre ainsi qu'au moins en partie l'une dans l'autre, ainsi qu'avec une fente (10) entre ces deux bagues (2, 3) de sorte qu'elles puissent tourner en opposition autour d'un axe imaginaire approximativement perpendiculaire au plan de bague au centre des bagues (2, 3) où, dans la zone d'une section de fente entourant avec un rayon constant l'axe de rotation entre les bagues (2, 3), sont disposées deux chemins de roulement (11, 12) pour deux rangées de billes (13, 14) roulant entre les bagues, dont chaque bille (13, 14) présente à température égale des bagues (2, 3) et des billes (13, 14) au moins chacune un point ou une zone de contact avec des segments de chemin de roulement (15, 16) au niveau de chacune des deux bagues (2, 3) de sorte que le jeu radial et/ou axial entre les deux bagues (2, 3) soit égal à zéro ou au moins minime au point d'être négligeable, avec un dispositif pour compenser des variations radiales dues à la température de la section transversale du chemin de roulement (11, 12) pour les rangées de billes (13, 14), de sorte que la contrainte de compression exercée sur les billes (13, 14) et/ou le jeu entre les bagues (2, 3) reste approximativement constant, même en cas de différence de température entre les bagues (2, 3) et/ou entre ces dernières et les billes (13, 14), **caractérisée en ce que**
a) respectivement une zone de deux segments de chemin de roulement (16) est disposée à l'extrémité libre (20, 24) de respectivement un des deux ressorts (22, 23), dont les zones inférieures sont reliées à une bague commune (2), où
b) les deux flancs des ressorts (22, 23) portant chacun un segment de chemin de roulement (16) sont réalisés par respectivement une entaille (18, 19, 21) en forme de rainure, et où
c) respectivement une rainure (18, 19) se trouve à hauteur des centres de bille.

2. Disposition de roulements selon la revendication 1, **caractérisée en ce qu'**une bille (13, 14) touche un segment de chemin de roulement (16) à ressort, approximativement dans la zone de la ligne médiane, par sa section transversale.

3. Disposition de roulements selon l'une des revendications 1 ou 2, **caractérisée en ce que** la droite à partir du centre d'une bille (13, 14) par rapport à son point de contact avec le segment de chemin de roulement à ressort (16) inclut un angle avec la ligne de la plus courte distance de la bille (13, 14) en question à partir de l'axe de rotation de la disposition de roulements (1) ; cet angle étant supérieur à 20°, de préférence supérieur à 30°, en particulier supérieur à 40°.

4. Disposition de roulements selon l'une des revendications précédentes, **caractérisée en ce que** le ressort (22 ,23) portant un segment de chemin de roulement (16) est réalisé sans fin et entoure la bague (2, 3) en question.

5. Disposition de roulements selon l'une des revendications précédentes, **caractérisée en ce que** la ligne médiane de la section de ressort (22, 23) coupe la médiatrice de la section transversale par le segment de chemin de roulement (16) qui y est réalisé, en particulier sa bissectrice, à un angle qui est inégal à zéro.

6. Disposition de roulements selon la revendication 5, **caractérisée en ce que** l'angle entre les lignes médianes ou bissectrices sécantes est supérieur à 20°, de préférence supérieur à 30°, en particulier supérieur à 40°.

7. Disposition de roulements selon l'une des revendications 5 ou 6, **caractérisée en ce que** l'angle entre les lignes médianes ou bissectrices sécantes est inférieur à 70°, de préférence inférieur à 60°, en particulier inférieur à 50°.

8. Disposition de roulements selon l'une des revendications précédentes, **caractérisée en ce que** l'axe longitudinal à travers une rainure (18, 19, 21) limitant un ressort (22, 23) est approximativement perpendiculaire à l'axe de rotation de la disposition de roulements (1).

9. Disposition de roulements selon la revendication 8, **caractérisée en ce que** dans au moins une rainure (18, 19) limitant un ressort (22, 23), en particulier dans une rainure (18, 19) entourant une rangée approximativement dans le plan des centres des billes (13, 14), est insérée une bague d'écartement (27) pour les billes (13, 14).

10. Disposition de roulements selon l'une des revendications précédentes, **caractérisée en ce que** les deux chemins de roulement (11, 12) sont réalisés symétriquement par rapport au plan médian commun intermédiaire.

11. Disposition de roulements selon l'une des revendications précédentes, **caractérisée en ce que** les segments à ressort (16) des deux chemins de roulement (11, 12) sont adjacents.

12. Disposition de roulements selon la revendication 11, **caractérisée en ce que** les deux segments de chemin de roulement (16) à ressort adjacents sont séparés l'un de l'autre par une rainure (21).

13. Disposition de roulements selon l'une des revendications précédentes, **caractérisée en ce que** les points ou zones de contact des billes (13, 14) des deux rangées sont opposés aux segments de chemin de roulement (15) en question de la bague (2, 3) ne faisant pas ressort.

14. Disposition de roulements selon l'une des revendications précédentes, **caractérisée en ce que** les points ou les zones de contact des billes (13, 14) avec les segments de chemin de roulement (15, 16) au niveau des deux bagues (2, 3) sont approximativement diamétralement opposés par rapport au centre de la bille (13, 14) en question.

15. Disposition de roulements selon l'une des revendications précédentes, **caractérisée en ce qu'**une bague (2, 3) est munie d'une denture circonférentielle.

16. Disposition de roulements selon la revendication 15, **caractérisée en ce que** la denture du/des chemin(s) de roulement (15, 16, 17) de la bague (2, 3) en question est disposée approximativement de manière opposée.
